# EUROPEAN PATENT APPLICATION

(11) **EP 2 410 644 A1**
(43) Date of publication of application: **25.01.2012**
(21) Application number: 10169965.0
(22) Date of filing: 19.07.2010
(51) Int. Cl.: H02M 1/08

(54) **A half bridge and half bridge control method**

(71) Applicant: SIEMENS AKTIENGESELLSCHAFT, 80333 München (DE)
(72) Inventor: Kenney, Richard, CW1 5RT Haslington, Crewe (GB)
(74) Representative: Morgan, Marc

(57) **Abstract**

A half bridge is driven to provide by pulse width modulation a desired output. The switching elements include drivers which have power supplies. The condition of the power supply is predicted by use of a model of operating parameters. This model is used in conjunction with a signal applied to one of the switch drivers to determine whether an operating criterion for the power supply of the other switch driver is met. If the condition is satisfied then a signal to the other switch driver is enabled.

## Description

This invention relates to a half bridge and a half bridge control method.

A half bridge is a common circuit arrangement for providing an output to drive another device such as an AC motor or transformer. The half bridge includes switches for selectively switching the output to a positive and negative DC supply rail. By varying the duty cycle of the switches, that is to say, the on and off times within a given period, it is possible to provide the desired output levels to the AC motor.

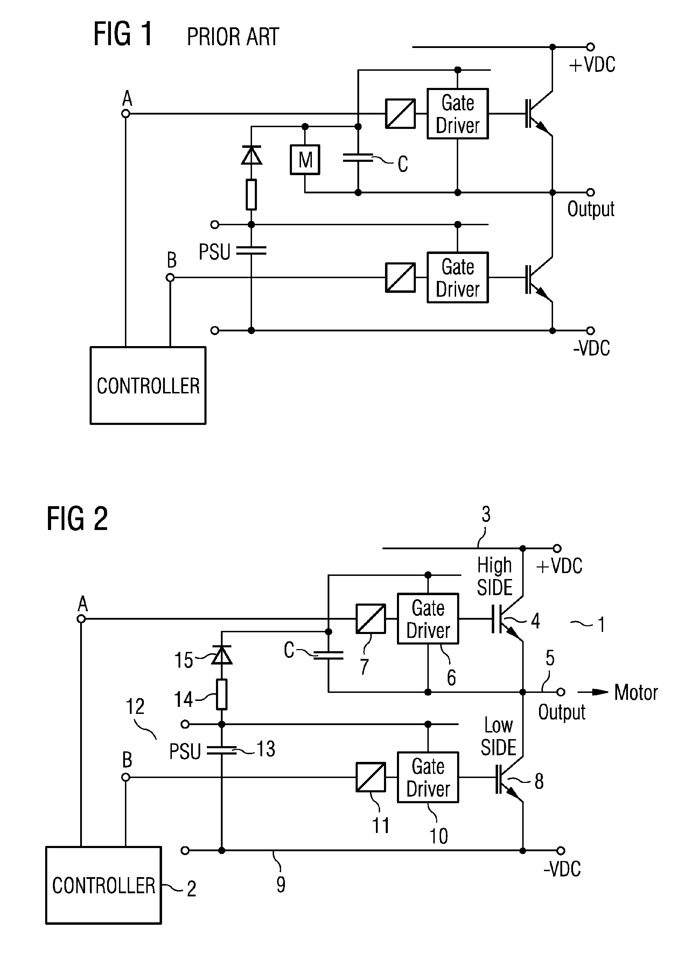

The switches in the half bridge are semiconductor devices and it is normal for these to be n type transistors. The switches are identified as high side and low side on the basis of their connection to the +DC or-DC supply rails. A problem with such arrangements is the need to provide boot-strapping to ensure that the high side switch gate drive is provided with a power supply when the low side switch is conducting. A typical prior art arrangement is shown in figure 1. The bootstrap capacitor C is monitored by a monitor circuit M. This is an analogue circuit which reacts to the voltage difference across the capacitor C. When the potential difference is sufficient it allows operation of the gate driver.

A problem for this arrangement is that the monitor circuit needs to be added to every gate drive on the high side for each half bridge that may be required. A typical application in the field of DC motors will require two half bridges. Adding such circuits to standard available half bridge components is undesirable since it adds to cost, and introduces the possibility of damage occurring due to manufacturing operations.

The invention arose in an attempt to mitigate the above mentioned problem.

According to the invention there is provided there is provided apparatus as recited in claim 1.

A further aspect of the invention provides a method.

A specific embodiment of the invention will now be described, by way of example only, with reference to the drawing in which:
Figure 1 shows a prior art arrangement already described.
Figure 2 shows an embodiment of the invention;
Figure 3 is a diagram of the blocks of functionality provided by a controller or the embodiment shown in figure 2; and
Figure 4 is an explanatory figure used in an explanation of the operation of the embodiment.

A half bridge 1 and Pulse Width Modulation controller 2 is shown in figure 2.

The half bridge includes a +VDC voltage rail 3, a high side switch 4 coupled between the voltage rail 3 and a bridge output 5. There is high side gate driver 6 which changes the state of the switch 4 in accordance with a signal applied at its signal input A. The signal input A is coupled via an isolator 7 to the PWM controller 2.

The low side is configured in much the same way as the high side. There is a low side switch 8 coupled across the output 5 and a -VDC rail 9. A low side gate driver 10 controls the operation of the low side switch 8 in response to a signal input B coupled to it via an isolator 11 from an output of the PWM controller 2.

A power supply unit 12 is connected to the lower side gate driver 10 to provide the power required for its operation. A boot strapping arrangement of a capacitor 13, resistor 14, diode 15 and a capacitor 16 is used to power the high side gate driver 6. The capacitor 16 is used to store energy for the supply to the gate driver 6 when the lower switch 8 is in the on state to connect the output 5 to -VDC. It may therefore be considered to be the power supply unit for the high side gate driver 6.

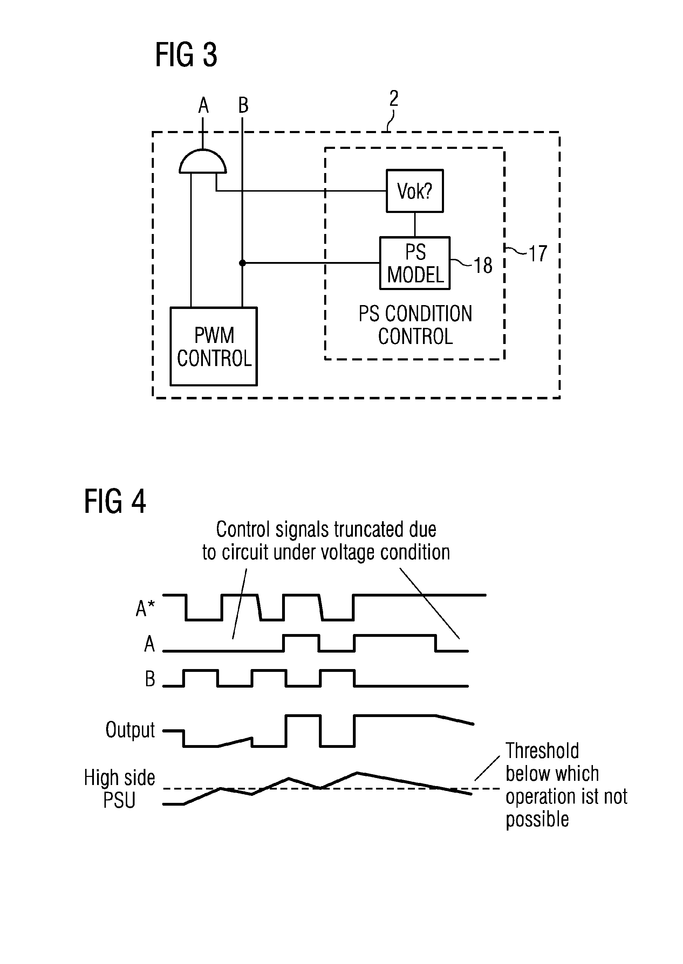

The controller 2 provides signals A and B in order to provide the correct switching of the switches 4 and 8 to provide the desired output voltage waveform. The controller is thus considered to be the PWM controller of the half bridge. The controller also provides other functionality as will now be described with reference to figure 3.

It will be seen that the controller comprises a PWM control function. This is of a standard form well known to a person skilled in the art to provide signals A and B. It will be seen that the signal B, which is for controlling the low side, is passed out of the controller but is also input to a power supply condition control function 17. This is concerned with the predicted state of the capacitor 16 which is used in the boot strapping arrangement to power the high side gate driver 6. This signal is input to a Power supply model function 18. The model uses criteria to be described later to determine on the basis of the model a predicted voltage state of the capacitor 16. If the model indicates a predicted value which is sufficient then a voltage flag ok result is output. This results in an output high being placed at an input of the logic gate and the signal A is enabled. This results in the high side driver coming into operation.

The model will also be used to determine malfunction and in that case the signal A will be inhibited switching the high side off protecting the bridge from damage by the voltage OK flag result being set to a negative value.

Figure 4 shows various signal states in correlation to explain the operation. The upper signal A* is the desired signal for the required PWM. The signal below that is A where this is the actual A signal output under the conditions at the point in time. Thus, just comparing these two signals it will be seen that for an initial start up phase the A signal delivered to the gate driver is low and the driver is not switched on even though this would be the case if the signal A* were applied. The reason for this is that for the capacitor 16 to reach its operating condition it has to be charged during the times that the signal B applied to the low side is high (on). Comparing the depiction of B with that of the waveform representing the high side PSU (capacitor 16) it will be seen that after the first pulse, the threshold of operation (in this case voltage) is not reached. The model indicates that there will then be a decay in the voltage based on the predetermined operation specification of the capacitor 16. Then on the next pulse of B the high side PSU crosses the operation threshold. This enables A and the output depicted in the figure arises.

The figure also explains a fault condition. If A remains on for more than a certain time frame but no B pulse is received then the model predicts that the voltage held by capacitor 16 will decay below a threshold. Then A is inhibited. This switches the high side off saving the components from damage.

The model may be based on a number of assumptions depending on the component values and the way in which the motor or other device is to be driven. For example, the model may be based on the following assumptions:
i) The high side power supply (the capacitor) will fully charge in ten cycles.
ii) The high side power supply will fully discharge in one hundred cycles.
iii) It can operate providing there have been no more than forty discharge cycles.
iv) Charging and discharging occurs in a linear relationship.
v) The Pulse Width Modulation scheme has a period of twenty cycles.

Applying this model where a fifty:fifty duty cycle is applied it will be seen that after the low side switch is active for the first ten cycle pulses, the high side power supply will be fully charged and will never discharge by more than ten cycles and thus the voltage will remain above the operational threshold.

If for one PWM period the duty cycle is changed to 100% high then the high side will be active for 10+ 20 cycles.

If the duty cycle remains at 100% on the high side for another PWM period, that is to say 100% for two PWM periods then the high would be active for a total of 50 cycles. Under these conditions, 40 cycles after the high side switches on the capacitor will discharge below the voltage threshold and the controller will output an inhibit flag to the logic gate switching off signal A. The output will then be allowed to float for 10 cycles until the low side is energised again.

If a high duty cycle of 95% is applies then the high side will charge by 10% each cycle and discharge by 5 %. After 13 periods the high side will operate as the model predicts that the capacitor voltage will cross the operating threshold. After 20 periods it will be fully charged.

It will be appreciated that many variations of the power supply model will be made. The invention in its broadest aspect provides a way of enabling a high side (or low side) signal based on the condition of the low side (or high side) signal to control the operation of a half bridge network.

## Claims

1. A half bridge, in use, operably coupled and responsive to a Pulse Width Modulation (PWM) controller providing control signals which half bridge comprising:
a high side switch and a low side switch coupled from a high side and low side to an output of the bridge;
respective switch driving circuits operably coupled to respective switches and responsive to signals received from the PWM controller to drive the switches;
a power supply for one of the high side or low side switch driving circuits;
a power supply condition controller responsive to a power supply model and to at least one of the signals from the PWM controller to control the application of the signal to the switch driving circuit.

2. A half bridge as claimed in claim 1 wherein the power supply condition controller is operable to control an initialisation of the half bridge.

3. A half bridge as claimed in claim 1 or 2 wherein the power supply condition controller is operable to prevent overload when the power supply is predicted to enter an inoperable condition.

4. A half bridge as claimed in any preceding claim wherein the power supply comprises a capacitor.

5. A half bridge as claimed in claim 4 wherein the power supply model comprises at least one of: predicted voltage state; voltage decay rate and or charge rate.

6. A half bridge as claimed in any preceding claim wherein the power supply is a bootstrap power supply.

7. A half bridge as claimed in any preceding claim wherein switch driver and isolation coupler are unitary components.

8. A method of controlling the operation of a half bridge network having a high side switch, a high side switch driver and associated power supply and a low side switch, a low side switch driver and associated power supply which method comprising:
providing a signal for controlling one of high side switch driver or low side switch driver;
providing a model of operating parameter of the power supply of the other of the high side switch driver or low side switch driver;
in response to the signal predicting using the model a predicted condition of the power supply; and
in event of the predicted condition satisfying an operating condition enabling a signal to the other of the high side switch driver or low side switch driver.

9. A method as claimed in claim 8 wherein in the event of the predicted condition satisfying a fault condition inhibiting the signal to the other of the high side switch driver or low side switch driver.

10. A method as claimed in claim 8 or 9 wherein the threshold is a voltage threshold of the power supply.

11. A method as claimed in claim 10 wherein the power supply comprises a capacitor.

12. A method as claimed in claim 11 comprising providing a model including parameters of charging rate, decay rate.
